# EUROPÄISCHE PATENTSCHRIFT

(11) **EP 1 867 031 B1**
(45) Veröffentlichungstag und Bekanntmachung des Hinweises auf die Patenterteilung: **09.04.2014**
(21) Anmeldenummer: 06707065.6
(22) Anmeldetag: 18.02.2006
(51) Int. Cl.: H02K 7/02

(54) **ROTOR FÜR ELEKTROMOTOR**
ROTOR FOR ELECTRIC MOTOR
ROTOR POUR MOTEUR ELECTRIQUE

(30) Priorität: 29.03.2005 DE 102005014678
(43) Veröffentlichungstag der Anmeldung: 19.12.2007
(73) Patentinhaber: SEW-EURODRIVE GmbH & Co. KG, 76646 Bruchsal (DE)
(72) Erfinder: BOERMANN, Friedrich, 76646 Bruchsal (DE); BOLLIAN, Oliver, 76275 Ettlingen (DE)
(86) Internationale Anmeldenummer: PCT/EP2006/001480
(87) Internationale Veröffentlichungsnummer: WO 2006/102956

(56) Entgegenhaltungen:
- WO-A-00/77390
- DE-A1- 10 258 364
- DE-A1- 19 937 545
- DE-C- 481 823
- US-A- 4 363 984

## Beschreibung

Die Erfindung betrifft einen Rotor für einen Elektromotor und einen Baukasten.

Als Servomotoren werden permanenterregte Synchronmotoren, brushless DC, also bürstenlose Gleichstrommotoren oderEC Motoren, also elektronisch kommutierte Motoren eingesetzt.

Bei Servomotoren soll der Rotor möglichst wenig Masse umfassen, damit die Herstellungskosten gering sind, das Massen-Trägheitsmoment gering bleibt und damit die Dynamik bei Positionieraufgaben hoch bleibt.

Bei manchen Anwendungen, wie beispielsweise in der Fördertechnik, werden von Servomotoren hohe lastseitige Massen-Trägheitsmomente angetrieben. Wenn das Verhältnis Massen-Trägheitsmomente der Last zum Massen-Trägheitsmoment des Rotors des Servomotors 10 : 1 oder gar 20 : 1 überschreitet wird die Regelgüte derart schlechter, dass sie teilweise nicht mehr akzeptabel ist. In solchen Fällen muss dann beispielsweise eine verdrehsteife Ankoppelung oder ein größerer Motor vorgesehen werden, um die Regelgüte zu verbessern.

**Aus der** DE 481 823 C **ist eine Anordnung des aus abnehmbaren Ringen zusammengesetzten Schwunggewichts bei Außenläuferelektromotoren bekannt.**

### Aus der DE 199 37 545 A1 ist ein Antriebsstrang bekannt.

Der Erfindung liegt daher die Aufgabe zugrunde, einen Servomotor zu schaffen, der für mehr als eine Anwendung nutzbar ist.

Erfindungsgemäß wird die Aufgabe bei dem Rotor nach den in Anspruch 1 und bei dem Baukasten nach den in Anspruch 16 angegebenen Merkmalen gelöst.

**Die Erfindung ist durch die Merkmale der unabhängigen Ansprüche definiert. Bevorzugte Ausgestaltungen der Erfindung sind in den abhängigen Ansprüchen definiert.**

Wesentliche Merkmale der Erfindung bei dem Rotor sind, dass eine Schwungmasse mit dem Rotor lösbar verbindbar ist.

Von Vorteil ist dabei, dass das Massen-Trägheitsmoment des Rotors vergrößerbar ist bei Verwendung desselben Motors, insbesondere eines Motors aus derselben Baugröße. Somit ist auch bei Anwendungen mit großem lastseitigen Massen-Trägheitsmoment eine hohe Regelgüte erreichbar. Durch die lösbare Verbindung ist auch ein testweises Verbinden der Schwungmasse ermöglicht. Somit kann nach der testweisen Überprüfung auch die Schwungmasse wieder entfernt werden.

Von Vorteil ist die Erfindung besonders bei Anwendungen, die in der Fördertechnik liegen, wobei Servomotoren verwendet werden, um schwere Bänder, große schwere Rollen oder große Massen anzutreiben. Dabei sind mit erfindungsgemäßen Servomotoren hohe lastseitige Massen-Trägheitsmomente antreibbar. Sogar, wenn das Verhältnis Massen-Trägheitsmomente der Last zum Massen-Trägheitsmoment des Rotors des Servomotors ohne die Schwungmasse 10 : 1 oder gar 20 : 1 überschreitet, ist eine ausreichende Regelgüte erreichbar, indem die Schwungmasse hinzuverbunden wird. In solchen Fällen ist es also nicht notwendig, einen größeren Motor vorzusehen. Es kann also noch immer der Motor der kleineren Baugröße, dessen Nenn-Drehmoment zum Antreiben der Last ausreicht, verwendet werden.

Bei einer vorteilhaften Ausgestaltung weist die Schwungmasse keine oder nur vernachlässigbare Unwucht auf. Von Vorteil ist dabei, dass durch das Verbinden der Schwungmasse keine Erhöhung der Unwucht verursacht wird.

Bei einer vorteilhaften Ausgestaltung weist die Schwungmasse Krallen in axialer Richtung auf. Von Vorteil ist dabei, dass die Schwungmasse radial sicherbar ist und formschlüssig verbindbar ist mit dem Rotor.

Bei einer vorteilhaften Ausgestaltung ist die Schwungmasse rotationssymmetrisch zur Achse des Rotors ausgebildet. Von Vorteil ist dabei, dass keine Unwucht des Rotors beim Verbinden vergrößert wird.

Gemäß der Erfindung weist die Schwungmasse Krallen auf oder ist mit Krallen verbunden, die in Hohlräume des Rotors einführbar sind. Insbesondere entspricht die Anzahl der Hohlräume der Polzahl des Motors. Von Vorteil ist dabei, dass eine möglichst große Anzahl von Krallen zur Verbindung verwendet wird, möglichst alle Hohlräume geschlossen werden und somit die Masse möglichst groß ist.

Bei einer vorteilhaften Ausgestaltung ist die Schwungmasse als Gussteil ausgebildet, insbesondere als Graugussteil. Von Vorteil ist dabei, dass in besonders kostengünstig Weise die Schwungmasse ausgebildet werden kann.

Bei einer vorteilhaften Ausgestaltung weist die Rotorwelle einen Sitz für Sicherungsring auf. Insbesondere sind die Schwungmasse und die Rotorwelle derart ausgebildet, dass die Schwungmasse mittels eines Sicherungsrings in axialer Richtung sicherbar ist. Von Vorteil ist dabei, dass eine formschlüssige Sicherung in einfacher und kostengünstiger Weise erreichbar ist.

Bei einer vorteilhaften Ausgestaltung wird als Elektromotor ein Synchronmotor, brushless DC, also bürstenloser Gleichstrommotor oder ein elektronisch kommutierter Motor, wie elektronisch kommutierter Synchronmotor oder dergleichen, eingesetzt. Von Vorteil ist dabei, dass diese Motoren als Servomotoren verwendbar sind und ohne Schwungmasse für Aufgaben mit sehr hohen Dynamik-Anforderungen verwendbar sind. Aber auch mit Schwungmasse sind sie genau dann vorteilig verwendbar, wenn der Rotor weniger als ein Zehntel des gesamten auf die Motorwelle bezogenen Massenträgheitsmomentes vom Gesamtsystem aufweist.

Bei einer vorteilhaften Ausgestaltung beträgt das Massenträgheitsmoment des Rotors ohne Schwungmasse weniger als 10 % des vom Motor anzutreibenden lastseitigen Massenträgheitsmoments. Insbesondere beträgt das Massenträgheitsmoment des Rotors ohne Schwungmasse weniger als 5 % des vom Motor anzutreibenden lastseitigen Massenträgheitsmoments. Von Vorteil ist dabei, dass dann durch die Schwungmasse der Prozentwert über die 5 % oder sogar 10 % Grenze erhöhbar ist und somit wieder eine hohe Regelgüte erreichbar ist.

Bei einer vorteilhaften Ausgestaltung beträgt das Massenträgheitsmoment des Rotors ohne Schwungmasse weniger als 10 % des vom Motor anzutreibenden lastseitigen Massenträgheitsmoments und das Massenträgheitsmoment des Rotors mit Schwungmasse beträgt mehr als 10 % des vom Motor anzutreibenden Massenträgheitsmoments. Insbesondere bei verdrehsteifen Übertragungen beträgt das Massenträgheitsmoment des Rotors ohne Schwungmasse weniger als 5 % des vom Motor anzutreibenden lastseitigen Massenträgheitsmoments und das Massenträgheitsmoment des Rotors mit Schwungmasse beträgt mehr als 5 % des vom Motor anzutreibenden Massenträgheitsmoments, insbesondere wobei die Last das mit dem Motor verbundene Getriebe umfasst. Von Vorteil ist wiederum dabei, dass mittels der Schwungmasse der Prozentwert über die 5 % oder sogar 10 % Grenze erhöhbar ist und somit wieder eine hohe Regelgüte erreichbar ist. Somit ist der gesamte Antrieb auf diese Weise insbesondere für Positionieraufgaben wieder vorteilig verwendbar.

Wesentliche Merkmale der Erfindung bei dem Baukasten von Elektromotoren sind, dass er mindestens zwei Varianten umfasst, wobei bei der ersten Variante ein Hohlräume umfassender Rotor vorgesehen ist und bei der zweiten Variante eine Schwungmasse mit dem Rotor verbindbar ist. Von Vorteil ist dabei, dass nur wenige Bauteile notwendig sind und trotzdem eine Vielfalt von Anwendungen abgedeckt werden kann, also stets der optimale Antrieb bereit gestellt werden kann.

Weitere Vorteile ergeben sich aus den Unteransprüchen.

### Bezugszeichenliste

- 1: Schwungmasse
- 2: Kralle
- 3: Rotorwelle
- 4: Magnete
- 5: Hohlräume
- 6: Sitz für Sicherungsring

Die Erfindung wird nun anhand von Abbildungen näher erläutert:

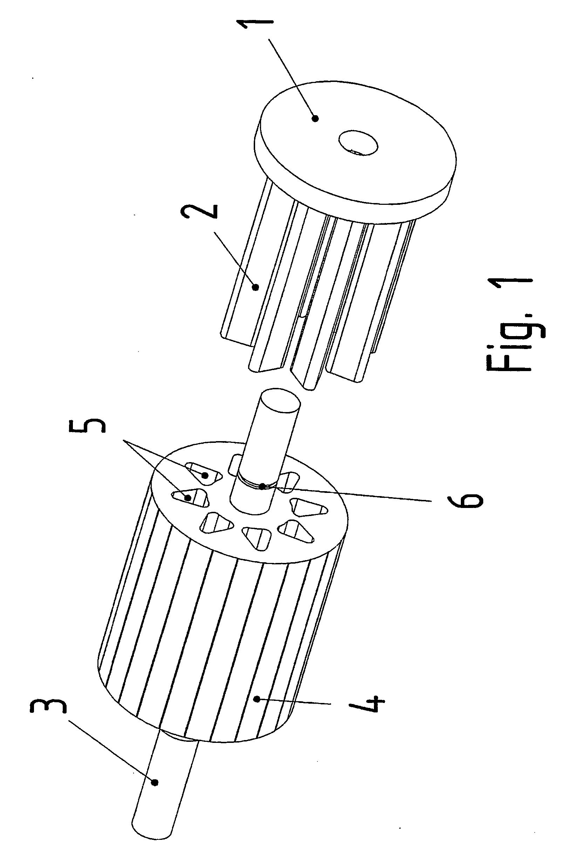

In der Figur 1 ist ein erfindungsgemäßer Rotor gezeigt.

Der Rotor ist bei einer ersten Variante mit Magneten 4 ausgestattet, die der Figur 1 dann entspricht, wenn die Teile 1 und 2 weggelassen werden. Die die Magnete tragende Rotorwelle 3 ist in Lagern des Motors an ihren beiden axialen Endbereichen im Gehäuse des Motors gelagert.

An ihrem geberseitigen axialen ersten Endbereich weist die Rotorwelle einen geringeren Durchmesser auf als an ihrem lastseitigen axialen zweiten Endbereich, also an ihrem abtriebsseitigen Endbereich. Denn am letztgenannten Endbereich ist die Drehmoment-Übertragung vorgesehen.

Im Gehäuse ist auch die Statorwicklung auf einem Blechpaket vorgesehen.

Der Rotor weist Hohlräume 5 auf, die die Masse des Rotors verringern und somit die hohe Dynamik, also das möglichst schnelle und genaue Positionieren, ermögüchen. Außerdem wird Material eingespart, was bei großen Motoren die Kosten erheblich reduziert.

Die Anzahl der Hohlräume entspricht vorteiligerweise der Polzahl des Motors.

Außerdem ist ein Sitz 6 für Sicherungsring auf der Rotorwelle vorhanden, der allerdings frei bleibt.

In Figur 1 ist die zweite Variante des Rotors gezeigt, die bei speziellen Anwendungsfällen einsetzbar ist.

Dabei wird die Schwungmassenkralle, umfassend Krallen 2 und Schwungmasse 1, mit ihren Krallen 2 in die Hohlräume des Rotors der ersten Variante eingeschoben und mit einem Sicherungsring, der am Sitz 6 vorgesehen ist, gesichert.

Die Schwungmasse 1 ist als zylindrische Scheibe ausgeführt. Bei anderen Ausführungsbeispielen sind aber auch andere Geometrieen verteilhaft. Die Krallen sind einstückig mit der Schwungmasse oder fest verbindbar mit der Schwungmasse ausführbar. Die einstückige Ausführung hat den Vorteil der besonders festen Verbindung der Krallen mit der Schwungmasse.

Somit ist die zweite Variante bei Anwendungen einsetzbar, bei welchen ein erhöhtes Massenträgheitsmoment notwendig oder von Vorteil ist, beispielsweise wenn die Regelgüte hoch sein soll.

Statt bei Elektromotoren ist die Erfindung auch bei anderen elektrischen Maschinen, wie beispielsweise Generatoren, einsetzbar.

Unter Elektromotoren werden auch Vorrichtungen verstanden, die zumindest einen Elektromotor umfassen. Unter Generator werden auch Vorrichtungen verstanden, die zumindest einen Generator umfassen.

Der Begriff Krallen ist allgemein zu verstehen. Insbesondere ist dabei wichtig, dass die Rotor und Krallen derart ausgeführt sind, dass in Umfangsrichtung eine formschlüssige Verbindung zum Rotor hin vorgesehen ist.

Zur axialen Sicherung der Lage ist bei anderen erfindungsgemäßen Ausführungsbeispielen eine andere formschlüssige Verbindung als mittels des erwähnten Sicherungsrings herstellbar, Aber es sind auch kraftschlüssige Verbindungen schnell und einfach herstellbar, wie Klemmverbindungen oder dergleichen.

Bei anderen erfindungsgemäßen Ausführungsbeispielen ist die Masse der Krallen höher ausgeführt als die der Schwungmasse 1 der Figur 1. Denn die Masse der Krallen selbst trägt ebenfalls zu einem höheren Trägheitsmoment bei.

Die geometrische Ausformung der Krallen und der Schwungmasse ist durch Optimieren bestimmbar.

## Patentansprüche

1. Rotor für eine elektrische Maschine, insbesondere Elektromotor oder Generator, wobei eine Schwungmasse mit dem Rotor lösbar verbindbar ist, insbesondere zur Erhöhung des Trägheitsmoments des Rotors, **dadurch gekennzeichnet, dass**
**an der Schwungmasse einstückig Krallen ausgeformt sind, die in Hohlräume des Rotors eingeschoben sind,** wobei **die Anzahl der Hohlräume der Polzahl des Motors entspricht.**

2. Rotor für eine elektrische Maschine, insbesondere Elektromotor oder Generator, wobei
eine Schwungmasse mit dem Rotor lösbar verbindbar ist, insbesondere zur Erhöhung des Trägheitsmoments des Rotors, **dadurch gekennzeichnet, dass**
**wobei die Schwungmasse mit Krallen verbunden ist, die in Hohlräume des Rotors eingeschoben sind,** wobei **die Anzahl der Hohlräume der Polzahl des Motors entspricht.**

3. Rotor nach mindestens einem der vorangegangenen Ansprüche,
**dadurch gekennzeichnet, dass**
die Schwungmasse mit dem Rotor formschlüssig verbindbar ist.

4. Rotor nach mindestens einem der vorangegangenen Ansprüche,
**dadurch gekennzeichnet, dass**
die Schwungmasse keine oder nur vernachlässigbare Unwucht aufweist.

5. Rotor nach mindestens einem der vorangegangenen Ansprüche,
**dadurch gekennzeichnet, dass**
die Schwungmasse rotationssymmetrisch zur Achse des Rotors ausgebildet ist.

6. Rotor nach mindestens einem der vorangegangenen Ansprüche,
**dadurch gekennzeichnet, dass**
die Schwungmasse als Gussteil ausgebildet ist, insbesondere als Graugussteil.

7. Rotor nach mindestens einem der vorangegangenen Ansprüche,
**dadurch gekennzeichnet, dass**
die Rotorwelle einen Sitz für Sicherungsring aufweist.

8. Rotor nach mindestens einem der vorangegangenen Ansprüche,
**dadurch gekennzeichnet, dass**
die Schwungmasse und die Rotorwelle derart ausgebildet sind, dass die Schwungmasse 5 mittels eines Sicherungsrings in axialer Richtung sicherbar ist.

9. Rotor nach mindestens einem der vorangegangenen Ansprüche,
**dadurch gekennzeichnet, dass**
der Elektromotor ein Synchronmotor, brushless DC, also bürstenloser Gleichstrommotor oder 10 ein elektronisch kommutierter Synchronmotor ist.

10. Rotor nach mindestens einem der vorangegangenen Ansprüche,
**dadurch gekennzeichnet, dass**
das Massenträgheitsmoment des Rotors ohne Schwungmasse weniger als 10 % des vom 15 Motor anzutreibenden lastseitigen Massenträgheitsmoments beträgt.

11. Rotor nach mindestens einem der vorangegangenen Ansprüche,
**dadurch gekennzeichnet, dass**
das Massenträgheitsmoment des Rotors ohne Schwungmasse weniger als 5 % des vom 20 Motor anzutreibenden lastseitigen Massenträgheitsmoments beträgt.

12. Rotor nach mindestens einem der vorangegangenen Ansprüche,
**dadurch gekennzeichnet, dass**
das Massenträgheitsmoment des Rotors ohne Schwungmasse weniger als 10 % des vom 25 Motor anzutreibenden lastseitigen Massenträgheitsmoments beträgt und
das Massenträgheitsmoment des Rotors mit Schwungmasse mehr als 10 % des vom Motor anzutreibenden Massenträgheitsmoments beträgt.

13. Rotor nach mindestens einem der vorangegangenen Ansprüche,
**dadurch gekennzeichnet, dass**
das Massenträgheitsmoment des Rotors ohne Schwungmasse weniger als 5 % des vom Motor anzutreibenden lastseitigen Massenträgheitsmoments beträgt und
das Massenträgheitsmoment des Rotors mit Schwungmasse mehr als 5 % des vom Motor anzutreibenden Massenträgheitsmoments beträgt, insbesondere wobei die Last das mit dem Motor verbundene Getriebe umfasst.

14. Elektromotor oder Generator umfassend eine Rotor nach mindestens einem der vorangegangenen Ansprüche.

## Claims

1. A rotor for an electric machine, in particular electric motor or generator, wherein a centrifugal mass can be detachably connected to the rotor, in particular in order to increase the moment of inertia of the rotor,
**characterised in that**
claws are formed in one piece on the centrifugal mass, which claws are inserted into cavities of the rotor, the number of cavities corresponding to the number of poles of the motor.

2. A rotor for an electric machine, in particular electric motor or generator, wherein a centrifugal mass can be detachably connected to the rotor, in particular in order to increase the moment of inertia of the rotor,
**characterised in that**
wherein [sic] the centrifugal mass is connected with claws which are inserted into cavities of the rotor, the number of cavities corresponding to the number of poles of the motor.

3. A rotor according to at least one of the preceding claims, **characterised in that** the centrifugal mass is able to be connected to the rotor in a positively-locking manner.

4. A rotor according to at least one of the preceding claims, **characterised in that** the centrifugal mass has no or only a negligible unbalance.

5. A rotor according to at least one of the preceding claims, **characterised in that** the centrifugal mass is formed rotationally symmetrically to the axis of the rotor.

6. A rotor according to at least one of the preceding claims, **characterised in that** the centrifugal mass is formed as a cast part, in particular as a grey cast iron part.

7. A rotor according to at least one of the preceding claims, **characterised in that** the rotor shaft has a seat for [a] securing ring.

8. A rotor according to at least one of the preceding claims, **characterised in that** the centrifugal mass and the rotor shaft are formed such that the centrifugal mass can be secured in the axial direction by means of a securing ring.

9. A rotor according to at least one of the preceding claims, **characterised in that** the electric motor is a synchronous motor, brushless DC motor or an electronically commutated synchronous motor.

10. A rotor according to at least one of the preceding claims, **characterised in that** the mass moment of inertia of the rotor without centrifugal mass is less than 10% of the load-side mass moment of inertia which is to be driven by the motor.

11. A rotor according to at least one of the preceding claims, **characterised in that** the mass moment of inertia of the rotor without centrifugal mass is less than 5% of the load-side mass moment of inertia which is to be driven by the motor.

12. A rotor according to at least one of the preceding claims, **characterised in that** the mass moment of inertia of the rotor without centrifugal mass is less than 10% of the load-side mass moment of inertia which is to be driven by the motor, and
the mass moment of inertia of the rotor with centrifugal mass is more than 10% of the mass moment of inertia which is to be driven by the motor.

13. A rotor according to at least one of the preceding claims, **characterised in that** the mass moment of inertia of the rotor without centrifugal mass is less than 5% of the load-side mass moment of inertia which is to be driven by the motor, and
the mass moment of inertia of the rotor with centrifugal mass is more than 5% of the mass moment of inertia which is to be driven by the motor, in particular with the load comprising the transmission which is connected to the motor.

14. An electric motor or generator comprising a rotor according to at least one of the preceding claims.

## Revendications

1. Rotor pour une machine électrique, en particulier pour un moteur électrique ou un alternateur, sachant qu'une masse d'inertie est assemblée de manière amovible au rotor, en particulier pour augmenter le moment d'inertie du rotor, **caractérisé en ce que** des crampons qui sont enfilés dans des cavités du rotor sont formés d'un seul tenant sur la masse d'inertie, sachant que le nombre de cavités correspond au nombre de pôles du moteur.

2. Rotor pour une machine électrique, en particulier pour un moteur électrique ou un alternateur, sachant qu'une masse d'inertie est assemblée de manière amovible au rotor, en particulier pour augmenter le moment d'inertie du rotor, **caractérisé en ce que** la masse d'inertie est assemblée à des crampons qui sont enfilés dans des cavités du rotor, sachant que le nombre de cavités correspond au nombre de pôles du moteur.

3. Rotor selon au moins une des revendications précédentes, **caractérisé en ce que** la masse d'inertie peut être assemblée au rotor par complémentarité de forme.

4. Rotor selon au moins une des revendications précédentes, **caractérisé en ce que** la masse d'inertie ne présente pas de balourd, ou seulement un balourd négligeable.

5. Rotor selon au moins une des revendications précédentes, **caractérisé en ce que** la masse d'inertie est réalisée à symétrie de rotation par rapport à l'axe du rotor.

6. Rotor selon au moins une des revendications précédentes, **caractérisé en ce que** la masse d'inertie est réalisée sous forme de pièce moulée en fonte, notamment de pièce moulée en fonte grise.

7. Rotor selon au moins une des revendications précédentes, **caractérisé en ce que** l'arbre de rotor présente un logement pour un jonc d'arrêt.

8. Rotor selon au moins une des revendications précédentes, **caractérisé en ce que** la masse d'inertie et l'arbre de rotor son conçus de telle sorte que la masse d'inertie est assujettie en direction axiale au moyen d'un jonc d'arrêt.

9. Rotor selon au moins une des revendications précédentes, **caractérisé en ce que** le moteur électrique est un moteur synchrone, brushless DC, donc un moteur à courant continu sans balais ou un moteur synchrone électroniquement commuté.

10. Rotor selon au moins une des revendications précédentes, **caractérisé en ce que** le moment d'inertie de masse du rotor sans masse d'inertie est égal à moins de 10 % du moment d'inertie de masse côté charge à entraîner par le moteur.

11. Rotor selon au moins une des revendications précédentes, **caractérisé en ce que** le moment d'inertie de masse du rotor sans masse d'inertie est égal à moins de 5 % du moment d'inertie de masse côté charge à entraîner par le moteur.

12. Rotor selon au moins une des revendications précédentes, **caractérisé en ce que** le moment d'inertie de masse du rotor sans masse d'inertie est égal à moins de 10 % du moment d'inertie de masse côté charge à entraîner par le moteur, et le moment d'inertie de masse du rotor avec masse d'inertie est égal à plus de 10 % du moment d'inertie de masse à entraîner par le moteur.

13. Rotor selon au moins une des revendications précédentes, **caractérisé en ce que** le moment d'inertie de masse du rotor sans masse d'inertie est égal à moins de 5 % du moment d'inertie de masse côté charge à entraîner par le moteur, et le moment d'inertie de masse du rotor avec masse d'inertie est égal à plus de 5% du moment d'inertie de masse à entraîner par le moteur, sachant notamment que la charge comprend la transmission reliée au moteur.

14. Moteur électrique ou alternateur comprenant un rotor selon au moins une des revendications précédentes.
